# EUROPEAN PATENT APPLICATION

(11) **EP 0 781 982 A1**
(43) Date of publication of application: **02.07.1997**
(21) Application number: 96308034.6
(22) Date of filing: 06.11.1996
(51) Int. Cl.: G01J 5/34

(54) **Infrared detector**

(30) Priority: 22.12.1995 JP 350145/95
(71) Applicant: MURATA MANUFACTURING CO., LTD., Nagaokakyo-shi Kyoto-fu 226 (JP)
(72) Inventor: Serikawa, Junichi, Nagaokakyo-shi, Kyoto-fu (JP); Okeshi, Motoyuki, Nagaokakyo-shi, Kyoto-fu (JP)
(74) Representative: Hillier, Peter

(57) **Abstract**

An infrared detector 20 has a field-effect transistor 12 provided on a substrate 2 while being positioned inside a space maintained by a spacer 10 placed on a base 11. An infrared detection element 1 provided on the substrate 2 with the spacer 10 interposed therebetween, the infrared detection element 1 being at such a planar position as to be superposed on the field-effect transistor 12. In this infrared detector, a spacer having an integral structure and having a space for accommodating the field-effect transistor 12 is used as the spacer 10. There is thus provided an infrared detector which can be manufactured at a reduced cost by using the spacer mount operation easier, in which variation in the height of a spacer is reduced, which is improved in position accuracy and which has a good external light characteristic.

## Description

The present invention relates to infrared detectors and, more particularly, to an infrared detector used for non-contact temperature sensing and human body sensing.

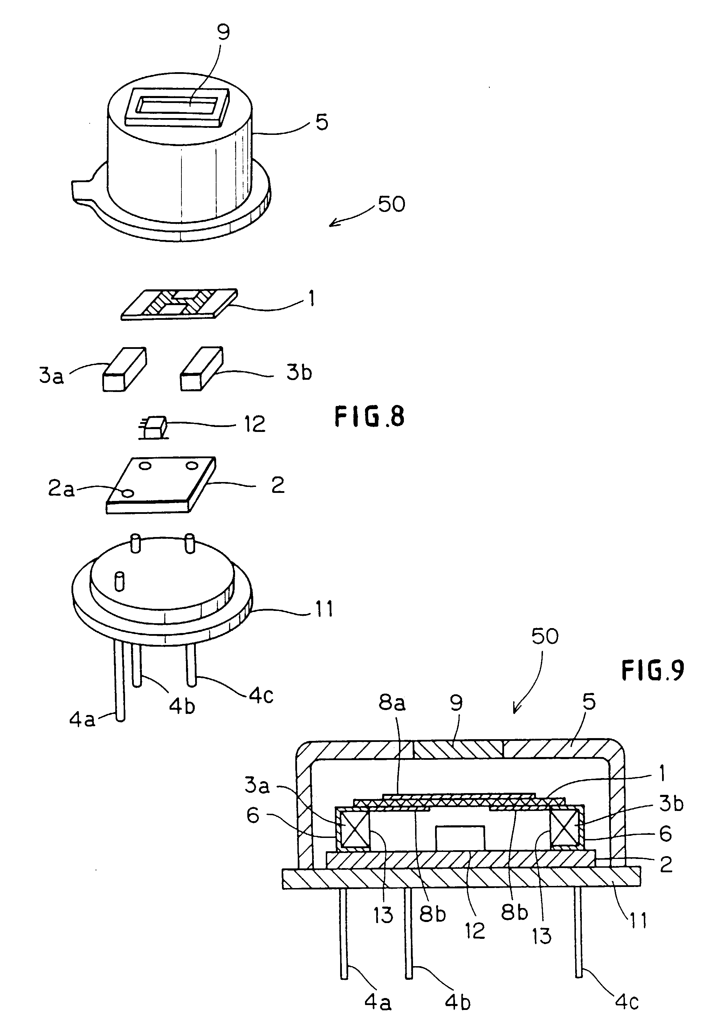

An infrared detector such as that illustrated in Figs. 8 and 9, for example, is known as a conventional infrared detector used for temperature sensing, human body sensing or the like.

This infrared detector 50 has an infrared detection element 1, a substrate 2, an field-effect transistor 12 mounted on the substrate 2, spacers 3a and 3b for maintaining a space for placing the field-effect transistor 12 between the infrared detection element 1 and the substrate 2, a stem 11 having three output lead wires 4a, 4b, and 4c for outputting a voltage generated in the infrared detection element 1, and a case 5 having a transparent window 9.

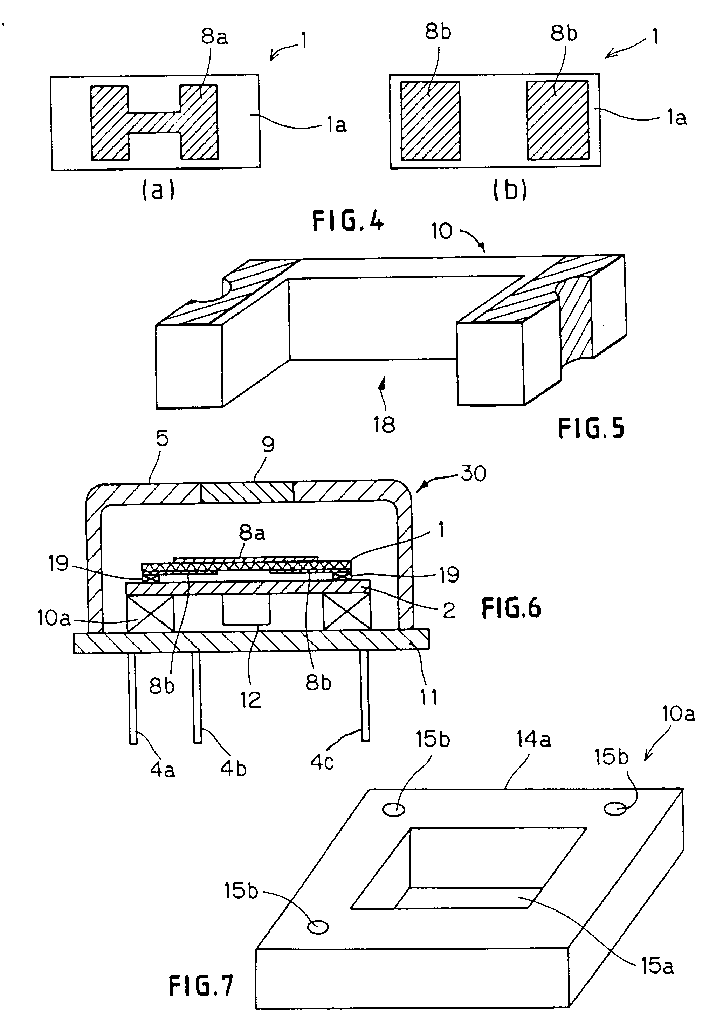

As shown in Fig. 4, the infrared detection element 1 of Figs. 8 and 9 is formed by providing an electrode 8a (Fig. 4(a)) on an obverse surface of a pyroelectric member 1a in the form of a plate obtained by forming a material selected from glycinium sulfate, which is an organic material, lithium tantalate-lead titanate, strontium-barium niobate, which are inorganic materials, and the like, and by providing electrodes 8b, 8b (Fig. 4(b)) on a reverse surface of the pyroelectric member 1a.

As the substrate 2 of Figs. 8 and 9, a member made of a ceramic such as alumina or a plastic composite material such as glass-epoxy is ordinarily used. The field-effect transistor 12 is mounted on the substrate 2 so as to be electrically connected to a circuit and electrodes (not shown) provided on the upper surface of the substrate 2. Through holes 2a (Fig. 8) through which the output lead wires 4a, 4b, and 4c are passed are formed in the substrate 2 to enable electrical connection to the base 11.

The spacers 3a and 3b are placed on the substrate 2 to maintain such a height as to accommodate the field-effect transistor 12. Each of the spacers 3a and 3b is formed by wrapping an electrode 6 around a member 13 formed of a ceramic from an upper surface, to a side surface and to a lower surface thereof.

The above-described conventional infrared detector is manufactured as described below. A solder paste is applied on the substrate 2, and spacers 3a and 3b are placed on the solder paste one after another, followed by reflowing. Thereafter, an electroconductive paste (not shown) is applied on the spacers 3a and 3b and infrared detection element 1 is placed on the paste. The paste is baked by a heat treatment. The parts are thus assembled. Thereafter, the infrared detection element 1 attached to the substrate 2 through the spacers 3a and 3b is accommodated in the case 5 having transparent window 9, and the case 5 and the base 11 are welded to each other in a sealing manner, thus obtaining infrared detector 50.

The above-described conventional infrared detector, however, uses two spacers 3a and 3b which cannot be easily mounted separately at predetermined positions on the substrate 2 while being maintained in a predetermined positional relationship. Troublesome operations are required to maintain the position accuracy, resulting in a reduction in productivity.

If the infrared detector is arranged so that the two spacers 3a and 3b are mounted simultaneously in order to reduce troublesome operations for separately mounting the spacers 3a and 3b, the manufacturing equipment become complicated and the manufacturing cost is increased.

The component parts are connected by being placed one on another on the base 11. There is, therefore, a possibility of occurrence of variation in the positions of the spacers 3a and 3b and the infrared detection element 1 (lateral misalignment) and there is also a possibility of variation in the direction of height due to variation in the height of the spacers 3a and 3b and non-uniformity of application of the conductive paste for bonding the spacers 3a and 3b and the infrared detection element 1. These position variations may cause a deterioration in external light characteristics and hence a deterioration in detection characteristics.

The present invention is concerned with the above-described problems, and an object of the present invention is to provide an infrared detector which can be manufactured at a reduced cost by making spacer mount operation easier, in which variation in the height of a spacer is reduced, which is improved in position accuracy and which has a good external light characteristic.

According to one aspect of the present invention, there is provided an infrared detector comprising:
a base;
a substrate placed on the base;
a field-effect transistor provided on the substrate;
a spacer for maintaining a space between the substrate and a below-mentioned infrared detection element in which the field-effect transistor is to be positioned;
an infrared detection element provided on the substrate with the spacer interposed therebetween, the infrared detection element being in such a planar position as to be superposed on the position at which the field-effect transistor is provided, the infrared detection element being electrically connected to electrodes or the like on the substrate; and
a case having a transparent window, the case forming a space for accommodating the component parts in cooperation with the stem,
wherein the spacer is integrally formed so as to have the space for accommodating the field-effect transistor.

In this infrared detector, a member having a space for accommodating the field-effect transistor and integrally formed is used as the spacer placed on the substrate. Occurrence of variation in the height of the spacer and misalignment between the spacer and the infrared detection element, such as those liable to occur in the case of using a plurality of spacers, is thereby prevented while the space for accommodating the field-effect transistor is maintained. As a result, an external light characteristic can be improved. Also, in comparison with the case of disposing a plurality of spacers, the operation of mounting the spacer can be simplified to achieve a reduction in manufacturing cost.

According to another aspect of the present invention, there is provided an infrared detector comprising:
a base;
a spacer placed on the base, the spacer for maintaining a space in which a below-mentioned field-effect transistor is to be positioned;
a substrate placed on the spacer;
a field-effect transistor provided on the lower surface side of the substrate by being positioned in the space maintained by the spacer;
an infrared detection element provided on the substrate so as to be electrically connected to electrodes or the like on the substrate; and
a case having a transparent window, the case forming a space for accommodating the component parts in cooperation with the stem,
wherein the spacer is integrally formed so as to have the space for accommodating the field-effect transistor.

This infrared detector has the structure in which the spacer is placed on the stem and the substrate having the field-effect transistor on its lower surface and the infrared detection element are successively placed on the spacer. As the spacer, a member having a space for accommodating the field-effect transistor and integrally formed is used. Occurrence of variation in the height of the spacer and misalignment between the spacer and the infrared detection element, such as those liable to occur in the case of using a plurality of spacers, is thereby prevented while the space for accommodating the field-effect transistor is maintained. As a result, an external light characteristic can be improved. Also, in comparison with the case of disposing a plurality of spacers, the operation of mounting the spacer can be simplified to achieve a reduction in manufacturing cost.

In the infrared detector of the present invention, the spacer for maintaining the space for the field-effect transistor is formed so as to have an integral structure, thereby preventing variation in the height the spacer and misalignment as well as simplifying the spacer mount operation.

Embodiments of the present invention will now be described in detail, by way of example only, with reference to the accompanying drawings of which:-

Fig. 1 is an exploded perspective view of an infrared detector which represents an embodiment of the present invention.

Fig. 2 is a front sectional view of the infrared detector representing the embodiment of the present invention.

Fig. 3 is a perspective view of a spacer used in the infrared detector representing the embodiment of the present invention.

Figs. 4(a) and 4(b) show an infrared detection element used in the infrared detector representing the embodiment of the present invention; Fig. 4(a) being a plan view showing an obverse-side structure thereof and Fig. 4(b) being a bottom view showing a reverse-side structure thereof.

Fig. 5 is a perspective view of another example of the spacer constituting the infrared detector in accordance with the present invention.

Fig. 6 is a front sectional view of an infrared detector which represents another embodiment of the present invention.

Fig. 7 is a perspective view of a spacer used in the infrared detector representing another embodiment of the present invention.

Fig. 8 is an exploded perspective view of a conventional infrared detector.

Fig. 9 is a front sectional view of the conventional infrared detector.

The reference numerals used in the drawings denote the following components:
- 1.: infrared detection element
- 1a: pyroelectric member
- 2: substrate
- 2a: through hole formed in substrate
- 4a, 4b, 4c: output lead wire
- 5: case
- 8a, 8b: electrode of infrared detection element
- 9: transparent window
- 10, 10a: spacer
- 11: base
- 12: field-effect transistor
- 14, 14a: member in the form of rectangular plate
- 15, 15a: center hole
- 15b: lead wire through hole
- 16: land (Cu foil)
- 17: through hole
- 18: cut
- 19: electroconductive adhesive
- 20, 30: infrared detector

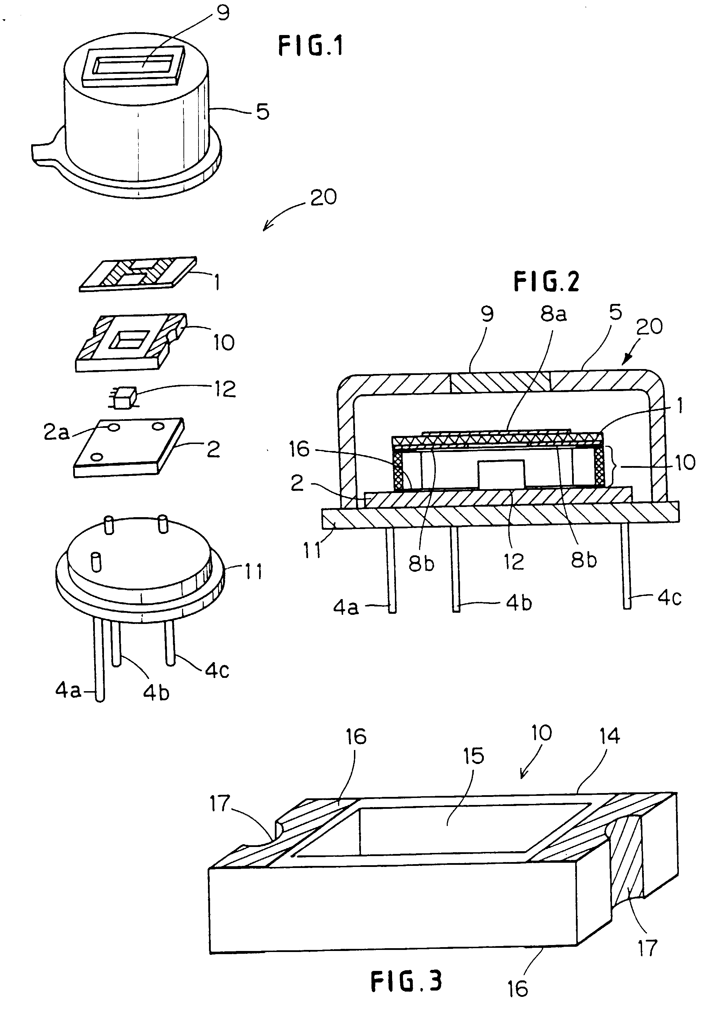

This infrared detector 20 of Figs. 1 and 2 has an infrared detection element 1, a substrate 2, an field-effect transistor 12 mounted on the substrate 2, a spacer 10 for maintaining a space for placing the field-effect transistor 12 between the infrared detection element 1 and the substrate 2, a base 11 having three output lead wires 4a, 4b, and 4c for outputting a voltage generated in the infrared detection element 1, and a case 5 having a transparent window 9.

The infrared detection element 1 is formed by providing an electrode 8a (Fig. 4(a)) on an obverse surface of a pyroelectric member 1a in the form of a plate obtained by forming a material selected from glycinium sulfate, which is an organic material, lithium tantalate-lead titanate, strontium-barium niobate, which are inorganic materials, and the like, and by providing electrodes 8b, 8b (Fig. 4(b)) on a reverse surface of the pyroelectric member 1a, as is that of the above-described conventional infrared detector.

As the substrate 2, a member made of a ceramic such as alumina or a plastic composite material such as glass-epoxy is ordinarily used, as in the case of the above-described conventional infrared detector. The field-effect transistor 12 is mounted on the substrate 2 so as to be electrically connected to a circuit and electrodes (not shown) provided on the upper surface of the substrate 2. Through holes 2a (Fig. 1) through which the output lead wires 4a, 4b, and 4c are passed are formed in the substrate 2 to enable electrical connection to the base 11.

In this infrared detector 20, the spacer 10 is integrally formed by providing a center hole (a rectangular hole in this embodiment) 15 at a center of a member 14 in the form of a rectangular plate made of glass-epoxy or the like, as shown in Fig. 3. The center hole 15 has such a size as to accommodate the field-effect transistor 12 mounted on the upper surface of the substrate 2.

On obverse and reverse surfaces of the spacer 10, lands (electrodes) 16 formed of Cu foil are formed for electrical connection to the infrared detection element 1, the electrodes on the substrate 2 and the like. Also, through holes 17 are formed in side surface portions of the spacer 10. It is necessary to increase the thickness of the spacer 10 relative to that of the field-effect transistor 12. However, it is desirable to limit the thickness of the spacer 10 if a reduction in the size of the infrared detector 10 is taken into consideration.

The structure of the spacer 10 is not limited to that described above. Other spacers 10 having various structures integrally formed and capable of maintaining the space for accommodating the field-effect transistor 12, for example, one having a structure with a cut 18 such as to have a rectangular U-shape as a planar shape, as shown in Fig. 5, are also applicable.

The shape of the spacer 10 is not limited to the shape of a rectangular plate, and the spacer 10 may have other various shapes. Also, there is no particular restriction on the shape of the center hole 15 for maintaining the space for accommodating the field-effect transistor 12 and the shape of the cut 18. The center hole 15 may be formed as an elongated hole or a rectangular hole, and the cut 18 may be formed so as to have a generally semicircular shape such that the shape of the spacer is U-shaped as viewed in plan.

It is not always necessary for the spacer 10 to be integrally formed of one material. The spacer 10 may be an integrally-formed member made of different kinds of material. Further, a different method for electrical connection between the obverse and reverse surfaces may be used in place of the above-described method of using a combination of lands and through holes.

The infrared detector 20 is manufactured by assembling the above-described components parts as described below. First, the spacer 10 is placed on the substrate 2 and connected to the same with a solder or an electroconductive adhesive. Then the spacer 10 and the infrared detection element 1 are connected to each other. There is no particular restriction on the method of connecting the spacer 10 and the infrared detection element 1. However, the productivity can be improved by using, for example, the method of previously connecting a parent spacer (a member in the form of a multiple spacer array used by being cut into parts having the desired size) and a parent element with an electroconductive adhesive and thereafter cutting the connected members by dicing or the like into units having the desired size instead of the conventional method of placing the substrate 2, the spacer 10 and the infrared detection element 1 one on another on the base 11.

Thereafter, the infrared detection element 1 attached to the substrate 2 through the spacer 10 is accommodated in the case 5 having transparent window 9, and the case 5 and the stem 11 are welded in a sealing manner, thus obtaining the infrared detector 20.

In the thus-constructed infrared detector 20, because a member having a space (center hole 15) for accommodating the field-effect transistor 12 and integrally formed is used as the spacer 10 placed on the substrate 2, occurrence of variation in the height of the spacer and misalignment between the spacer and the infrared detection element, such as those liable to occur in the case of using a plurality of spacers, can be prevented while the space for accommodating the field-effect transistor is maintained, so that an external light characteristic can be improved. Also, in comparison with the case of disposing a plurality of spacers, the operation of mounting the spacer can be simplified to achieve a reduction in manufacturing cost.

Fig. 6 illustrates an infrared detector 30 which represents a second embodiment of the present invention, and in which a field-effect transistor 12 is provided on the lower surface of a substrate 2.

This infrared detector 30 is constructed as described below. A spacer 10a (Fig. 7) having a center hole 15a as a space for accommodating the field-effect transistor 12 formed therein is placed on a base 11, and the substrate 2 having an infrared detection element 1 provided on its upper surface and the field-effect transistor 12 provided on its lower surface is placed on the spacer 10a. Electrical connection is established between the substrate 2 and the base 11 and between the substrate 2 and the infrared detection element 1. These parts are accommodated between the stem 11 having three output lead wires 4a, 4b, and 4c and a case 5 having a transparent window 9. The field-effect transistor 12 is accommodated in the center hole 15a of the spacer 10a while being attached to the lower surface of the substrate 2.

The spacer 10a has a structure in which, as shown in Fig. 7, a center hole (a rectangular hole in this embodiment) 15a in which the field-effect transistor 12 is to be accommodated is formed at a center of a member 14a in the form of a rectangular plate formed of a glass-epoxy substrate or the like. Lead wire through holes 15b for passing the output lead wires 4a, 4b, and 4c through the spacer 10a are formed in the spacer 10a. The shape of the spacer 10a is not limited to the shape of rectangular plate and may be selected from other various shapes. There is no particular restriction on the shape of the center hole 15a for maintaining the space for accommodating the field-effect transistor 12. The center hole 15a may be formed as a circular hole or an elongated hole or may have a cutout structure.

In this infrared detector 30, an electroconductive adhesive 19 for establishing electrical connection to the substrate 2 is printed and applied on the reverse surface of the infrared detection element 1 to bond the infrared detection element 1 and the substrate 2 to each other so that electrical connection is established therebetween by the electroconductive adhesive 19.

Also in the case where the field-effect transistor 12 is provided on the lower surface side of the substrate 2, a member having a space (center hole or the like) for accommodating the field-effect transistor 12 and integrally formed can be used as the spacer 10a placed on the substrate 2 to prevent occurrence of variation in the height of the spacer and misalignment between the spacer and the infrared detection element, such as those liable to occur in the case of using a plurality of spacers, while maintaining the space for accommodating the field-effect transistor, so that an external light characteristic can be improved. Also, in comparison with the case of disposing a plurality of spacers, the operation of mounting the spacer can be simplified to achieve a reduction in manufacturing cost.

The present invention is not limited to the above-described embodiments; other various applications and changes of the present invention with respect to the shape and structure of the base, the case or the field-effect transistor or with respect to the construction of the substrate or the infrared detection element can be made without departing from the scope of the invention.

As described above, in the infrared detector in the first aspect of the present invention, a member having a space for accommodating the field-effect transistor and integrally formed is used as a spacer placed on the substrate, thereby preventing occurrence of variation in the height of the spacer and misalignment between the spacer and the infrared detection element, such as those liable to occur in the case of using a plurality of spacers, while maintaining the space for accommodating the field-effect transistor. As a result, an external light characteristic can be improved. Moreover, in comparison with the case of disposing a plurality of spacers, the operation of mounting the spacer can be simplified to achieve a reduction in manufacturing cost.

The infrared detector in the second aspect of the present invention has the structure in which a spacer is placed on the base and the substrate having the field-effect transistor on its lower surface and the infrared detection element are successively placed on the spacer. As the spacer, a member having a space for accommodating the field-effect transistor and integrally formed is used, thereby preventing occurrence of variation in the height of the spacer and misalignment between the spacer and the infrared detection element, such as those liable to occur in the case of using a plurality of spacers, while maintaining the space for accommodating the field-effect transistor. As a result, an external light characteristic can be improved. Moreover, in comparison with the case of disposing a plurality of spacers, the operation of mounting the spacer can be simplified to achieve a reduction in manufacturing cost.

The present invention achieves advantages described below.

(1) Variation in the height of the spacer and misalignment between the spacer and the infrared detection element, such as those liable to occur in the case of using a plurality of spacers, can be prevented.

(2) Misalignment between the infrared detection element and the spacer can be prevented to achieve an improvement in characteristics by integrally working the infrared detection element and the spacer or by attaching the spacer to the reverse surface of the substrate.

(3) Because the spacer has an integral structure, connection between the spacer and the infrared detection elements or connection between the spacer and the substrate can be effected for a plurality of units at a time, thereby remarkably improving the productivity.

## Claims

1. An infrared detector comprising:
a base (11);
a substrate (2) placed on said base (11) ;
a field-effect transistor (12) provided on said substrate (2);
a spacer (10) for maintaining a space between said substrate (2) and a below-mentioned infrared detection element (1) in which space said field-effect transistor (12) is to be positioned;
an infrared detection element (1) provided on said substrate (2) with said spacer (10) interposed therebetween, said infrared detection element (1) being in such a planar position as to be superposed on the position at which said field-effect transistor (12) is provided, said infrared detection element (1) being electrically connected to electrodes or the like on said substrate (2); and
a case (5) having a transparent window (9), said case (5) forming a space for accommodating said component parts in cooperation with said stem;
wherein said spacer is integrally formed so as to have the space for accommodating said field-effect transistor.

2. An infrared detector comprising:
a base (11);
a spacer (10a) placed on said base (11), said spacer (10a) maintaining a space in which a below-mentioned field-effect transistor (12) is to be positioned;
a substrate (2) placed on said spacer (10a) ;
a field-effect transistor (12) provided on the lower surface side of said substrate (2) by being positioned in the space maintained by said spacer (10a);
an infrared detection element (1) provided on said substrate (2) so as to electrically connected to electrodes or the like on said substrate (2); and
a case (5) having a transparent window, said case forming a space for accommodating said component parts in cooperation with said stem;
wherein said spacer (10a) is formed so as to have the space for accommodating said field-effect transistor (12).
